# EUROPÄISCHE PATENTSCHRIFT

(11) **EP 1 504 952 B1**
(45) Veröffentlichungstag und Bekanntmachung des Hinweises auf die Patenterteilung: **25.10.2006**
(21) Anmeldenummer: 04450157.5
(22) Anmeldetag: 29.07.2004
(51) Int. Cl.: B60N 2/24, B60R 21/02

(54) **Sitzeinrichtung für die Bedienperson eines Waffensystems in einem Kampfwagen**
Seat device for the operator of a weapon system in a combat vehicle.
Agencement de siège pour le servant d'un système d'arme dans un véhicule de combat.

(30) Priorität: 07.08.2003 AT 12472003
(43) Veröffentlichungstag der Anmeldung: 09.02.2005
(73) Patentinhaber: Steyr-Daimler-Puch Spezialfahrzeug GmbH, 1110 Wien (AT)
(72) Erfinder: Sulm, Günther, 1110 Wien (AT); Weber, Hans, DIpl.-Ing., 1110 Wien (AT)
(74) Vertreter: Rippel, Andreas

(56) Entgegenhaltungen:
- DE-A- 3 426 432
- DE-A- 3 741 101
- US-A- 3 899 042
- US-A- 3 951 429
- US-A- 4 685 731

## Beschreibung

Die Erfindung bezieht sich auf eine Sitzeinrichtung für die Bedienperson eines Waffensystems in einem Kampfwagen.

Moderne Kampfwagen, insbesondere Schützenpanzer, zeichnen sich besonders dadurch aus, daß leistungsstarke Antriebsaggregate und Hochleistungsfahrwerke hohe Einsatzgeschwindigkeiten auch im Gelände erlauben. Mehrachsstabilisierte Waffensysteme ermöglichen genaue Trefferergebnisse auch bei hochdynamischen Geländefahrten. Der Richtschütze ist dabei besonderen Belastungen und Gefahren ausgesetzt, da aufgrund der Trägheit des Köpers die dynamischen Bewegungen des Fahrzeuges und des Waffensystems nur verzögert nachgeführt werden können, und damit ein Sicherheitsabstand zu den Bedienelementen eingehalten werden müßte, um einer Verletzungsgefahr vorzubeugen. Weiters ist es bisher nur sehr erschwert möglich, präzise Richtbewegungen unter derart dynamischer Belastung durchzuführen.

Die vorliegende Erfindung hat es sich zum Ziel gesetzt eine Sitzeinrichtung zu schaffen, die eine einwandfreie Bedienung des Waffensystems auch unter extremen Fahrbedingungen mit stark wechselnden dynamischen Belastungen sicherstellt.

DE-A-3741101 offenbart eine Sitzeinrichtung für eine Bedienperson nach dem Oberbegriff des Anspruchs 1.

Erreicht wird dies durch die kennzeichnenden Merkmale des Anspruchs 1.

Bei einer erfindungsgemäßen Sitzeinrichtung ist die Bedienperson bzw. der Richtschütze für das Waffensystem in optimaler Weise zu dem Waffensystem stabilisiert, sodaß ein sicheres Richten und Schießen ermöglicht wird.

Um die Druckwirkungen von Bruststütze und Rückenlehne möglichst klein zu halten, sind diese zweckmäßig gepolstert.

Zur Fixierung der Bruststütze kann es im Rahmen der Erfindung zweckmäßig sein, eine formschlüssige oder kraftschlüssige Einrichtung vorzusehen.

Damit die Bedienperson ihre Einsatzstellung einnehmen und aus dieser Stellung leicht aussteigen kann, ist bei einem Ausführungsbeispiel der Erfindung vorgesehen, daß die Bruststütze an einem Arm angeordnet ist, der von und zur Bedienperson schwenkbar gelagert ist.

Es ist auch möglich, daß zur Verstellung der Bruststütze ein elektrischer, pneumatischer oder hydraulischer Aktuator angeordnet ist.

Zur Verstellung der Rückenlehne kann bei einem bevorzugten Ausführungsbeispiel der Erfindung ein Formprofil vorgesehen sein.

Es ist ferner möglich, zur Verstellung der Rückenlehne einen elektrischen, pneumatischen oder hydraulischen Aktuator vorzusehen.

Nachstehend ist die Erfindung anhand eines in den Zeichnungen dargestellten Ausführungsbeispieles näher beschrieben ohne auf dieses Beispiel beschränkt zu sein. Dabei zeigen:
- Fig. 1: in Seitenansicht, teilweise geschnitten, eine erfindungsgemäße Sitzeinrichtung mit einer schematisch dargestellten Bedienperson;
- Fig. 2: die Draufsicht, insbesondere teilweise geschnitten auf die Sitzeinrichtung nach Fig. 1 ohne die Bedienperson;
- Fig. 3: in einer der Fig. 2 ähnlichen Darstellung die erfindungsgemäße Sitzeinrichtung mit weggeschwenkter Bruststütze.

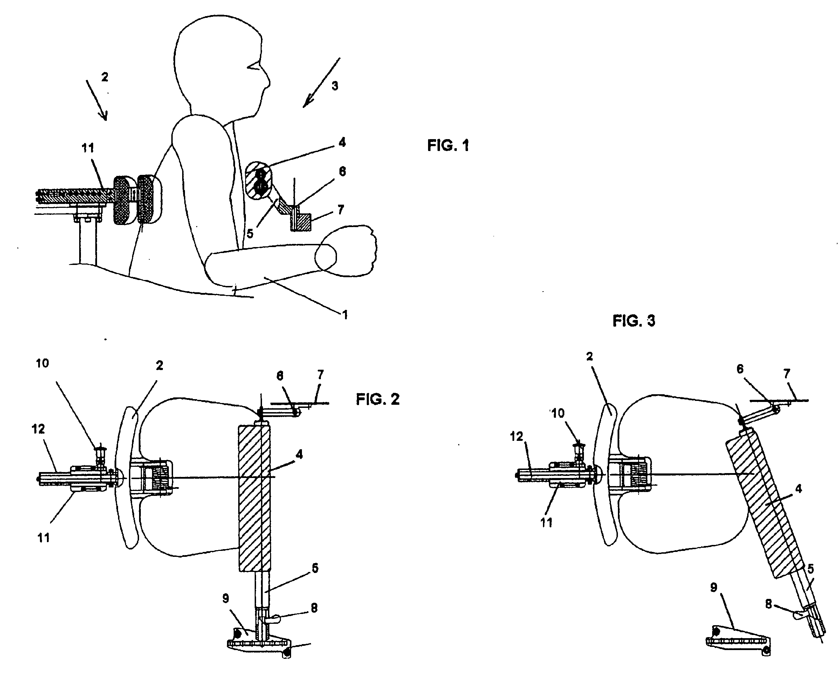

Gemäß den Zeichnungen, insbesondere Fig. 1, wird der Oberkörper der Bedienperson 1, des Richtschützen, mittels einer verstellbaren Rückenlehne 2 und einer ebenfalls verstellbaren Bruststütze 3 in einer stabilen Position zum Waffensystem gehalten. Die Rückenlehne 2 und die Bruststütze 3 sind mit dem Waffensystem starr verbunden, sodaß die dynamischen Bewegungen aufgenommen werden.

Die Bruststütze 3 ist im Auflagebereich der Brust des Richtschützen 1 mit einem weichen Polster 4, z.B. einem geschäumten Kunststoff, umhüllt. Die gepolsterte Bruststütze 3 ist an einem Arm 5 angeordnet, der um eine Achse 6 schwenkbar ist. Die Achse 6 ist an einem Aufnahmeteil 7 befestigt. Am gegenüberliegenden Teil der Achse 6 ist ein Einstellriegel 8 vorgesehen, der mit Löchern einer Konsole 9 zusammenwirkt.

Wie aus Fig. 3 ersichtlich ist, kann dadurch die Bruststütze 3 weggeschwenkt werden, sodaß der Richtschütze 1 seinen Platz einnehmen kann.

Die gepolsterte Rückenlehne 2 wird an den Rücken des Schützen 1 angelegt und fixiert. Die Fixierung erfolgt beim dargestellten Ausführungsbeispiel durch einen federbelasteten Rasthebel 10, der in Löcher einer Konsole 11 eingreift, die als Führung für ein Profil 12 dient, mit dem die Rückenlehne 2 verbunden ist.

Im Rahmen der Erfindung sind zahlreiche Abänderungen möglich. So wäre grundsätzlich die Verstellung auch nur der Bruststütze oder der Rückenlehne möglich, wobei der andere Teil nicht verstellbar ist. Auch könnten Rückenlehne und/oder Bruststütze sowohl in horizontaler als auch in vertikaler Richtung verstellbar sein. Bei der Rückenlehne 2 wäre dies z.B. dadurch möglich, daß diese auf einer vertikalen Schiene verschiebbar ist, die auf der Konsole 11 befestigt ist.

Zur Betätigung von Bruststütze und/oder Rückenlehne könnten elektrische, pneumatische oder hydraulische Aktuatoren vorgesehen sein. Die Fixierung von Rückenlehne und/oder Bruststütze kann mit anderen, jedem Fachmann geläufigen Mitteln erfolgen.

## Patentansprüche

1. Sitzeinrichtung mit Waffensystem für die Bedienperson des Waffensystems in einem Kampfwagen, **dadurch gekennzeichnet, daß** eine Bruststütze (3) und/oder eine Rückenlehne (2) zumindest in horizontaler Richtung verstell- und arretierbar ist, sodaß die Bruststütze (3) und die Rückenlehne (2) mit dem Waffensystem starr verbunden sind und die Bedienperson (1) zwischen Bruststütze (3) und Rückenlehne (2) in physiologisch optimaler Form zu den Bedienelementen des Waffensystems fixierbar ist.

2. Sitzeinrichtung nach Anspruch 1, **dadurch gekennzeichnet, daß** die Bruststütze (3) und die Rückenlehne (2) gepolstert sind.

3. Sitzeinrichtung nach Anspruch 1 oder 2, **dadurch gekennzeichnet, daß** zur formschlüssigen Fixierung der Bruststütze (3) eine Konsole (9) angeordnet ist.

4. Sitzeinrichtung nach Anspruch 1 oder 2, **dadurch gekennzeichnet, daß** die Fixierung der Bruststütze (3) kraftschlüssig erfolgt.

5. Sitzeinrichtung nach einem der Ansprüche 1 bis 3, **dadurch gekennzeichnet, daß** die Bruststütze (3) an einem Arm (5) angeordnet ist, der von und zur Bedienperson (1) schwenkbar gelagert ist.

6. Sitzeinrichtung nach einem der Ansprüche 1 bis 5, **dadurch gekennzeichnet, daß** zur Verstellung der Bruststütze (3) ein elektrischer, pneumatischer oder hydraulischer Aktuator angeordnet ist.

7. Sitzeinrichtung nach einem der Ansprüche 1 bis 6, **dadurch gekennzeichnet, daß** zur Verstellung der Rückenlehne (2) ein Formprofil (12) angeordnet ist.

8. Sitzeinrichtung nach einem der Ansprüche 1 bis 7, **dadurch gekennzeichnet, daß** zur Verstellung der Rückenlehne (2) ein elektrischer, pneumatischer oder hydraulischer Aktuator angeordnet ist.

## Claims

1. A seating device with weapon system for the operator of the weapon system in an armoured vehicle, **characterised in that** a chest support (3) and/or a backrest (2) is at least horizontally adjustable and lockable so that said chest support (3) and said back rest (2) are rigidly connected to the weapon system and the operator (1) is fixed between chest support (3) and backrest (2) in the physiologically optimal form with respect to the control elements of the weapon system.

2. The seating device according to claim 1, **characterised in that** the chest support (3) and the backrest (2) are upholstered.

3. The seating device according to claim 1 or 2, **characterised in that** a bracket (9) is provided for positive fixing of the chest support (3).

4. The seating device according to claim 1 or 2, **characterised in that** the fixing of the chest support (3) is accomplished non-positively.

5. The seating device according to any one of claims 1 to 3, **characterised in that** the chest support (3) is disposed on an arm which is mounted so that it can pivot away from and towards the operator (1).

6. The seating device according to any one of claims 1 to 5, **characterised in that** an electrical, pneumatic or hydraulic actuator is provided for adjustment of the chest support (3).

7. The seating device according to any one of claims 1 to 6, **characterised in that** a form profile (12) is provided for adjustment of the backrest (2).

8. The seating device according to any one of claims 1 to 7, **characterised in that** an electrical, pneumatic or hydraulic actuator is provided for adjustment of the backrest (2).

## Revendications

1. Siège avec arme de combat, pour l'opérateur de l'arme de combat dans un véhicule de combat, **caractérisé en ce qu'**un appui pectoral (3) et/ou un dossier (2) est réglable et blocable au moins en direction horizontale, pour que l'appui pectoral (3) et le dossier (2) soient reliés de façon rigide avec l'arme de combat et que l'opérateur puisse être fixé de façon physiologiquement optimale par rapport aux éléments de manoeuvre de l'arme de combat, entre l'appui pectoral (3) et le dossier (2).

2. Siège selon la revendication 1, **caractérisé en ce que** l'appui pectoral (3) et le dossier (2) sont rembourrés.

3. Siège selon la revendication 1 ou 2, **caractérisé en ce qu'**une console (19) est disposée pour la fixation par complémentarité de forme de l'appui pectoral (3).

4. Siège selon la revendication 1 ou 2, **caractérisé en ce que** la fixation de l'appui pectoral (3) est assurée par complémentarité de force.

5. Siège selon l'une quelconque des revendications 1 à 3, **caractérisé en ce que** l'appui pectoral (3) est disposé sur un bras (5) qui est logé de façon à pouvoir être pivoté loin de l'opérateur et vers l'opérateur.

6. Siège selon l'une quelconque des revendications 1 à 5, **caractérisé en ce que** pour le réglage de l'appui pectoral (3) un actionneur électrique, pneumatique ou hydraulique est disposé.

7. Siège selon l'une quelconque des revendications 1 à 6, **caractérisé en ce que** pour le réglage du dossier (2) un profilé moulé (12) est disposé.

8. Siège selon l'une quelconque des revendications 1 à 7, **caractérisé en ce que** pour le réglage du dossier (2), un actionneur électrique, pneumatique ou hydraulique est disposé.
